# EUROPEAN PATENT SPECIFICATION

(11) **EP 4 479 306 B1**
(45) Date of publication and mention of the grant of the patent: **05.08.2026**
(21) Application number: 23705052.1
(22) Date of filing: 08.02.2023
(51) Int. Cl.: B64C 21/02, B64C 23/00, B64C 30/00, B64D 1/06, B64D 7/08, F41F 3/065, F41F 3/06

(54) **CAVITY ACOUSTIC TONES SUPPRESSION**
UNTERDRÜCKUNG AKUSTISCHER HOHLRAUMTÖNE
SUPPRESSION DE TONALITÉS ACOUSTIQUES DE CAVITÉ

(30) Priority: 15.02.2022 GB 202202463
(43) Date of publication of application: 25.12.2024
(73) Proprietor: BAE SYSTEMS plc, London SW1Y 5AD (GB)
(72) Inventor: BRAID, Stephen, Michael, Brough Yorkshire HU15 1EQ (GB)
(74) Representative: BAE SYSTEMS plc Group IP Department
(86) International application number: PCT/GB2023/050272
(87) International publication number: WO 2023/156759

(56) References cited:
- US-A- 2 749 064
- US-A1- 2016 031 549
- US-B1- 6 296 202
- US-B1- 6 513 754
- US-B2- 10 017 250

## Description

### FIELD OF THE INVENTION

The present invention relates to a cavity system for use on a vehicle. Example vehicles include aircraft, and therefore example cavities include cavities in bays such as weapons bays and landing gear bays.

### BACKGROUND

US2749064A discloses a cavity system in an aircraft. When a cavity is moving in ambient fluid, for example when an aircraft bay is moving in air, a shear layer is formed between the moving ambient air and the static air in the cavity (from the reference point of the aircraft). A shear layer is a thin region of concentrated vorticity across which the tangential velocity component varies greatly; it is positioned across the top of the bay and separates high speed and low speed flow. A vortex is shed from the cavity leading edge and grows as it travels down the shear layer and impacts on the aft (trailing) wall of the bay resulting in the emission of noise. Also, the acoustic wave travels back upstream inside the bay. The fluctuating pressure of the acoustic wave may either result in vortices being shed from the leading edge cavity lip or an increase in the growth rate of the vortices such that a series of vortices is formed down the shear layer at a preferential rate which is related to the frequency of the upstream acoustic wave. The vortices grow into large-scale structures as they propagate downstream in the shear layer and then impact the aft (trailing) wall of the bay at a characteristic rate. This results in acoustic noise being generated at a characteristic rate that may be described as acoustic tones of a characteristic frequency.

These flow structures are difficult to predict and simulate. Similar problems are found in other types of vehicles, such as high performance cars having open roofs or windows, or ships at sea with open hatches where the impinging wind speed is high.

It is known in aircraft to employ spoiler arrangements to divert the airflow over and beyond the cavity, i.e. over and beyond any boundary layer or prospective shear layer so that the above-described effects do not take place. These spoilers are deployed either in front of or across the cavity.

It has been realised that cross-flow (i.e. transverse or lateral flow) also has an effect on acoustic noise in cavities, and is not mitigated using existing spoiler designs.

Therefore, there is a need for a lightweight palliative mechanism for reducing or controlling the effect of acoustic noise in cavities caused by cross-flow.

### SUMMARY OF THE INVENTION

According to a first aspect, there is provided a cavity system according to claim 1.

Advantageously, the presence of flow partitions tends to reduce the effect of acoustic noise by lifting the shear layer above the cavity. Further, the simple design tends to entrain a vortex along the side of the cavity which provides some stability to outer edges of the cavity flow and potentially maintain a higher shear layer for longer than would be achieved with a traditional spoiler.

The longitudinal edges may be parallel with the actual or intended direction of travel of the vehicle.

The inboard surface may be parallel with the longitudinal edge of the cavity. Alternatively, the inboard surface may be angled relative to the cavity. The inboard surface may be angled at between about 5 degrees and 45 degrees relative to the longitudinal edge of the cavity. More preferably, the inboard surface may be angled at between about 10 degrees and 25 degrees relative to the longitudinal edge of the cavity.

The cavity system may comprise a bay having a front wall, rear wall and at least one side wall, the upper surfaces of which respectively comprising the front edge, the rear edge and the longitudinal edges. There may be one continuous side wall, or two side walls coupled by way of a base. The bay may be a rotary payload bay. Alternatively, the bay may be a fixed payload bay having at least one hinged door across the opening.

The at least one flow partition may protrude from an upper surface of the at least one side wall. Alternatively, the at least one flow partition may protrude from the skin of a vehicle surrounding the cavity.

The at least one flow partition comprises a plurality of open channels between the inboard surface and the outboard surface. The channels may be cylindrical, having a circular cross section. Alternatively, the channels may be tessellated with each other. The channels may form a honeycomb structure. The channels may be hexagonal in cross-section.

The inboard surface and/or outboard surface of the at least one flow partition may be non-planar. The inboard surface and/or outboard surface may be formed of a plurality of discrete panels coupled together at oblique angles. The inboard surface and/or outboard surface may be have a sawtooth or zigzag structure. The inboard surface and/or outboard surface may be arced. The inboard surface and/or outboard surface may comprise a series of adjacent concave and convex surfaces.

An upper surface of the at least one flow partition may be undulating in the vertical plane (i.e. undulating or variable in height). The upper surface may comprise a sawtooth, zigzag or sinusoidal profile. The upper surface may comprise a square wave profile. The upper surface may comprise at least one shock stabiliser.

The cavity system may comprise at least one shock stabiliser arranged on either side of the cavity to protrude into the ambient flow. The cavity system may comprise a plurality of pairs of shock stabilisers, with shock stabilisers within each pair arranged on opposite sides of the cavity. Shock stabilisers within each pair may be offset from each other along the longitudinal axis of the flow partition.

The at least one shock stabiliser may be disposed on the upper surface of the at least one flow partition. Alternatively, the at least one shock stabiliser may be disposed adjacent to the outboard surface of the at least one flow partition. The at least one shock stabiliser may be coupled to the outboard surface of the at least one flow partition. The at least one shock stabiliser may be integrally formed with the at least one flow partition.

Each shock stabiliser may comprise a plurality of peaks. The peaks may be pointed tips.

The at least one shock stabiliser may comprise first and second outboard surfaces facing generally away from the cavity, wherein the first and second outboard surfaces are inclined relative to each other about the horizontal axis of the shock stabiliser. The shock stabiliser may comprise an inboard surface facing towards the cavity, and the first and second outboard surfaces may be coupled to respective edges of the inboard surface of the shock stabiliser or to the outboard surface of the at least one flow partition. The inboard surface of the shock stabiliser may be vertical. Alternatively, the inboard surface may be arranged at an angle relative to the vertical plane.

The inboard surface of the shock stabiliser may be angled relative to the longitudinal edge of the cavity such that a distance between the inboard surface and the cavity increases with distance along the shock stabiliser. Alternatively, the inboard surface of the shock stabiliser may be arranged in parallel with the longitudinal edge of the cavity.

The first and second outboard surfaces may be inclined relative to each other about the horizontal axis and vertical axis of the shock stabiliser. The inboard surface may be a trapezoid or a triangle.

The cavity system may comprise a third outboard surface disposed between the first and second outboard surfaces. The third outboard surface may be rectangular, square, or trapezoidal in shape.

The at least one shock stabiliser may comprise a linear upper edge angled towards the base of the shock stabiliser, such that the height profile of the shock stabiliser reduces along its length. Instead of a linear upper edge, the shock stabiliser may comprise a pointed tip. The shock stabiliser may be pyramidal in shape.

The at least one shock stabiliser may comprise a linear upper edge angled away from the vertical plane passing through the edge of the cavity, such that the upper edge increases in separation from the longitudinal edge of the cavity along its length. The linear upper edge may be angled away from both the vertical plane and towards the base of the shock stabiliser.

The upper edge of the at least one shock stabiliser and the longitudinal edge of the cavity may be arranged such that an angle of between 5 degrees and 45 degrees is formed between them. More preferably, an angle of between 10 degrees and 25 degrees is formed between the upper edge of the at least one shock stabiliser and the longitudinal edge of the cavity. More preferably again, an angle of between 15 degrees and 20 degrees is formed between the upper edge of the at least one shock stabiliser and the longitudinal edge of the cavity.

The upper edge of the shock stabiliser may be arranged obliquely with the bottom edges of the inboard surface and the third outboard surface, such that the third outboard surface and the inboard surface are twisted about the vertical axis.

The at least one shock stabiliser may comprise an outboard surface facing generally away from the cavity, a front surface facing toward the actual or intended direction of travel of the vehicle, and a rear surface facing away from the actual or intended direction of travel of the vehicle, wherein the front surface is concave in profile such that the shock stabiliser forms a ramp to oncoming fluidic flow in the actual or intended direction of travel of the vehicle. The front surface may be orientated such that it faces the actual or intended direction of travel of the vehicle at an angle of between 5 and 20 degrees. More preferably, the front surface may be orientated such that it faces the actual or intended direction of travel of the vehicle at an angle of between 5 and 10 degrees.

The cavity system may comprise a motor for driving the at least one shock stabiliser to ascend from or descend into the surface adjacent the cavity longitudinal edge. The surface may comprise at least one recess for receiving the at least one shock stabiliser. The recesses may have a cover to close them when the at least one shock stabiliser is retracted.

The at least one shock stabiliser may be between 2cm and 20cm tall. The at least one shock stabiliser may be between one boundary layer thickness and six boundary layer thicknesses tall. Preferably, the at least one shock stabiliser is between 3cm and 15m tall. More preferably, the at least one shock stabiliser is between 4cm and 12cm tall. More preferably, the at least one shock stabiliser is between 5cm and 10cm tall.

The cavity system may comprise between three and six shock stabilisers disposed on either side of the cavity. Preferably, the cavity system comprises four shock stabilisers arranged on either side of the cavity.

The shock stabilisers may be arranged in pairs, wherein one shock stabiliser in each pair of shock stabilisers is arranged on the opposite side of the cavity to the other. In other words, the cavity system may comprise a plurality of pairs of shock stabilisers, with shock stabilisers within each pair arranged on opposite sides of the cavity. Both shock stabilisers within a pair may be located at an equidistant position from an end of the longitudinal edge of the cavity. Alternatively, the pairs of shock stabilisers may be staggered along the length of the cavity, such that a first one of each pair is a first distance from the end of the longitudinal edge and a second one of each pair is a second distance from the end of the longitudinal edge. Each of the pairs of shock stabilisers may be spaced apart equidistantly.

The inboard surface of the at least one flow partition may lie at an acute angle with respect to the longitudinal edge of the cavity. In other words, the flow partition may increase in distance from the edge of the cavity along the length of the flow partition from front to rear. Alternatively, the inboard surface may be parallel with the longitudinal edge of the cavity.

The at least one flow partition may be between 2cm and 20cm tall. More preferably, the at least one flow partition is between 3cm and 15cm tall. More preferably again, the at least one flow partition is between 3.5cm and 12cm tall.

The cavity system may comprise a motor for driving the at least one flow partition to ascend from or descend into the surface adjacent the cavity longitudinal edge.

Alternatively, the cavity system may comprise a motor and the at least one flow partition may comprise a hinge, wherein the motor is arranged to drive the at least one flow partition to rotate about the hinge to be selectively positioned in the ambient flow or positioned to rest against the surface adjacent the cavity.

The cavity system may comprise a transverse spoiler arranged across or in front of the cavity relative to the actual or intended direction of travel of the vehicle. The transverse spoiler may be arranged orthogonally to the at least one flow partition.

The cavity system may comprise a releasable payload. The releasable payload may be an ordinate, such as a bomb or a missile.

According to a second aspect, there is provided an aircraft comprising the cavity system according to any one of the preceding claims. The cavity may be a weapons bay.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent.

### BRIEF DESCRIPTION OF THE DRAWINGS

Embodiments will now be described, by way of non-limiting example, with reference to the accompanying drawings, in which:
Figure 1 is a perspective view (not to scale) of a rotary payload bay having a cavity partition system according to an embodiment;
Figure 2 is a perspective view (not to scale) of a rotary payload bay having a cavity partition system according to another embodiment;
Figure 3 is a perspective view (not to scale) of a rotary payload bay having a cavity partition system according to another embodiment;
Figure 4a is a schematic illustration of an aircraft having the rotary payload bay of Figure 1 in a closed configuration;
Figure 4b is a schematic illustration of an aircraft having the rotary payload bay of Figure 1 in an open configuration;
Figures 5a and 5b are cross-sectional views of cavity partitions according to embodiments; and
Figures 6a to 6d are perspective views of different designs of cavity partition surface profiles according to embodiments.

Throughout, the same reference numerals are used to denote features having similar purpose.

### DETAILED DESCRIPTION

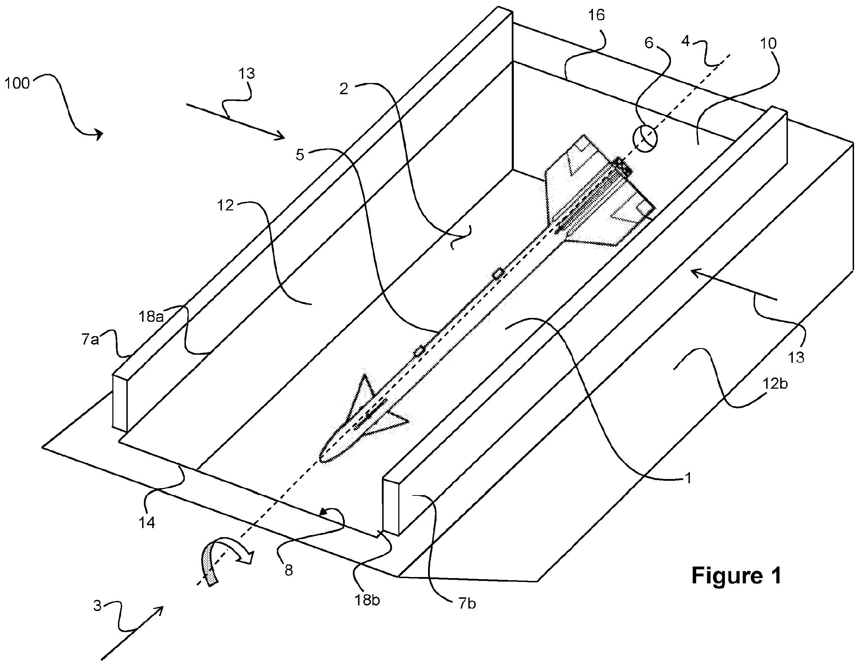

It will be appreciated that relative terms such as horizontal and vertical, top and bottom, above and below, front and back, and so on, are used above merely for ease of reference to the Figures, and these terms are not limiting as such, and any two differing directions or positions and so on may be implemented rather than truly horizontal and vertical, top and bottom, and so on. In particular, for convenience, in Figure 1 a cavity is shown with it opening at the top of the page, and so for convenience the word "top" is used to mean the opening of the cavity, and the word "above" means further away from the cavity. However, it will be appreciated that the present disclosure refers also to cavities positioned for example underneath the wing or fuselage of e.g. an aircraft, i.e. upside down to that shown in Figure 1, but the description use of the word "top" will still refer to the opening part of the cavity and that of the word "above" will still refer to being away from the cavity.

Cavities are usually accompanied by doors, which partition the cavity flow to any external cross-flow. For cavities in absence of doors, consideration has not been given to partition the cavity flow to external cross-flow or to utilise the external flow to support the shear layer across the length of the cavity.

Generally, embodiments relate to the use of longitudinal cavity fences to partition external cross-flow from the cavity unsteady flow. These fences, or partitions, are elongate and are positioned along the longitudinal sides of the cavity, parallel with those sides, rather than at its front or rear.

Figure 1 is a perspective view of bay 100 (specifically a payload bay) having flow partitions 7a, 7b (generally 7) according to an embodiment. While a bay 100 for containing a payload 5 such as a missile or camera system is illustrated, it would be appreciated that in use the bay 100 may be empty, or may be a depression in a structure. The payload 5 may be a deployable payload, or ordinate, that is released from the bay 100.

The bay 100 comprises a cavity 2. The cavity 2 is defined by the inside surface of walls of bay 100. In use, the bay 100 moves through a fluid (e.g. air), and therefore a fluidic main flow 3 acts in the opposite direction to the actual or intended direction of movement of the bay 100. The bay 100 comprises, defined relative to the actual or intended direction of main flow 3, a leading (i.e. front) wall 8, an aft (trailing) wall 10, and two side walls 12a, 12b (generally 12). In the illustrated embodiment, the cavity 2 comprises a rectangular planar base 1 and has a rectangular opening (i.e. aperture). The side walls 12 and aft wall 10 are perpendicular to the planar base 1, while the front wall 8 is slanted relative to the base 1 such that the opening has a greater perimeter than the perimeter of the base 1. Each wall 8, 10, 12 respectively comprises an upper surface, one edge of each of which defines the leading edge 14, trailing edge 16, and side edge 18a, 18b (generally 18) of the cavity 2, i.e. the edges 4, 16, 18 of the cavity 2 define the opening of the cavity 2. The upper surfaces of each of the walls 8, 10, 12 are co-planar.

While in the illustrated embodiment the side walls 12 are shown as being longer than the front and rear walls 8, 10, this may not be the case in other embodiments. For example, the cavity 2 may be relatively wide transverse (i.e. orthogonally) to the direction of the main flow 3. In these embodiments, following reference to the "longitudinal edges" should be translated to the "lateral edges", i.e. those edges parallel with the direction of the main flow 3.

The bay 100 is a rotary bay having an axis of rotation 4. In the illustrated embodiment, the axis of rotation 4 is aligned with the central longitudinal axis of the bay 100. In other embodiments, the bay 100 may rotate about an axis offset to one side of the bay 100, for example, along the side edge 18 of the bay 100.

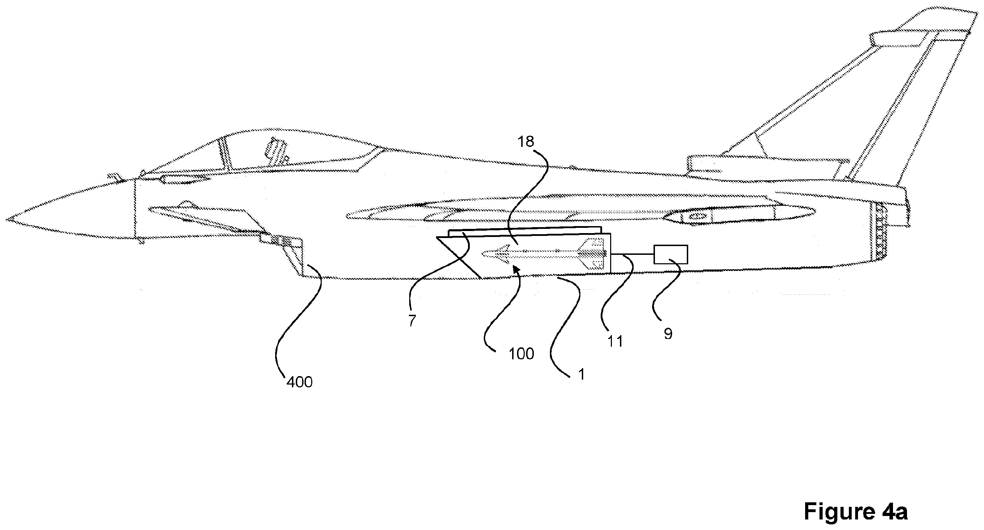

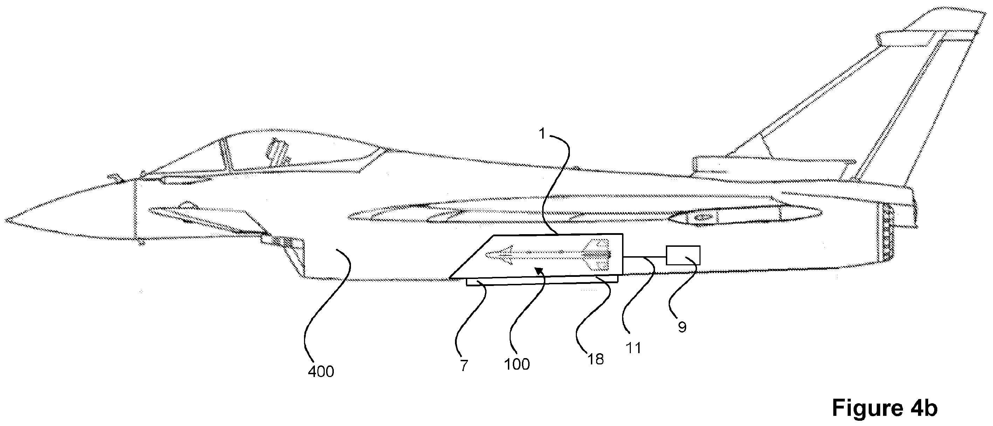

The bay 100 is driven to rotate about a pivot point 6 through which the axis of rotation 4 passes. As illustrated in Figures 4a and 4b, the bay 100 may be driven to rotate by a motor 9. The bay 100 rotates in order to expose the payload 5 to the ambient flow (e.g. ambient airflow).

In use, there will be a cross-flow 13 acting on the bay 100. The cross-flow 13 is illustrated as being orthogonal to the actual or intended direction of travel of the bay 100 for the purpose of defining shapes and angles of bay 100 components; i.e. the cross-flow 13 is illustrated as being orthogonal to the main flow 3. However, in reality cross-flow will approach the bay 100 through a range of angles.

One flow partition 7 is arranged on either side of the cavity 2 (i.e. parallel with the two longitudinal edges 18). In an alternative embodiment, a flow partition 7 is arranged on only one side of the cavity 2, although this is less preferable. The flow partitions 7 may extend the full length of the cavity 2, i.e. along the full length of the longitudinal edge 18. In alternative embodiments, the flow partitions 7 may be shorter than the length of the cavity 2. For example, the flow partitions 7 may be about half the length of the cavity 2 and may be positioned centrally along the length of the edge 18. More preferably, the leading edge of the flow partition 7 is aligned with the leading edge 14 of the cavity 2. Preferably, the flow partition 7 may extend to cover at least three quarters (¾) of the length of the cavity 2.

There may be more than one flow partition 7 along one side of the cavity 2. These plurality of flow partitions 7 may be co-axial with each other.

While the upper edge of each flow partition 7 is shown as being linear and parallel with the longitudinal edge 18 of the cavity 2 (i.e. with no inclination or declination relative to the plane of the surface to which the flow partition is attached), in another embodiment, the flow partitions 7 may vary in height along their length. For example, the flow partitions may decrease in height relative to the upper surface of the side walls 12 from the front of the cavity 2 towards the rear edge 16.

The maximum height (i.e. vertical extent) of the flow partitions 7 may be selected according to the cavity 2 geometry. However, maximum height of the flow partition 7 is of the order of about 3cm to 20cm.

The pattern along the longitudinal axis of the flow partitions 7 may be uniform, i.e. a zig zag with base triangles of constant width and length. Alternatively, the pattern along the longitudinal axis may be non-uniform, such as by comprising odd protrusions at random positions.

The flow partitions 7 have an inboard surface facing towards (i.e. predominantly towards, rather than predominantly away from) the cavity 2, and an outboard surface facing towards (i.e. predominantly towards, rather than predominantly away from) impinging cross-flow (i.e. predominantly facing away from the cavity 2). The inboard surface is illustrated as being co-planar with the inner surface of the side wall 12 of the cavity 2. In an alternative embodiment, the inboard surfaces of the flow partitions 7 are positioned between 0 and 0.05 times the length of the cavity 2 from the cavity edge 18.

The inboard surface is illustrated being parallel with the longitudinal edge 18 of the cavity. In other embodiments, the flow partition 7 may be angled relative to the edge 18 of the cavity 2 such that an angle of up to 45 degrees is formed between edge and the plane of the inner surface along its whole length. More preferably, an angle of about 20 degrees is formed between the plane of the inner surface and the edge 18. This means the front part of the flow partition 7 is closer to the cavity edge 18 than the rear part of the flow partition 7.

The flow partitions 7 have a thickness (i.e. lateral extent) of between 5mm and 25mm. The flow partitions 7 in the illustrated embodiment have a constant thickness, although in alternative embodiments they may vary in thickness along their length. Therefore, in top-down cross-section, the flow partitions 7 may have an undulating profile (e.g. zigzag, sinusoidal, or stepped, or tapered). In other words, the flow partitions 7 may have curved (i.e. non-planar, undulating) inboard and/or outboard surfaces. The inboard surface of the flow partition 7 may match the contour of the outboard surface, or one may be planar while the other is undulating.

The inboard and outboard surfaces of the flow partition 7 are uninterrupted planes in the illustrated embodiment, extending from the surface to which the flow partition 7 is attached to the maximum height of the flow partition 7. In other words, the flow partitions 7 are similar to solid walls.

The flow partition 7 could be made from any material strong enough to withstand high velocity freestream flow and high noise. For example, the flow partition 7 may be made of titanium or a composite such carbon fibre. Alternatively, the flow partition 7 may be formed of a plastic or aluminium. The flow partition 7 may be made of the same material as the skin of the vehicle to which it is attached. The flow partition 7 may be formed of gauze or mesh.

While the flow partitions 7 are shown as protruding from, or being affixed to, the upper surface of the side walls 12, in embodiments where the cavity 2 is an aperture in the skin of a vehicle the flow partitions may protrude from or be affixed to that skin. The flow partitions 7 may be integrally formed with the skin of the vehicle or the side walls 12 of the bay 100. The flow partitions 7 form a seal with the top of the cavity wall 12 or neighbouring skin to prevent external cross-flow 13 leaking into the cavity 2.

In one embodiment, each flow partition 7 comprises a hinge. The hinge is arranged to allow the flow partition 7 to pivot about its longitudinal axis such that in a retracted configuration the flow partition 7 does not substantially protrude into the cross-flow 13 and in a deployed configuration the flow partition 7 extends into the cross-flow 13. In the retracted configuration, the flow partition 7 lies flat against the upper surface of the side wall 12 or the skin of the vehicle. In other words, the inboard or outboard surface of the flow partition 7 is coplanar with the upper surface of the side wall 12 or the skin of the vehicle. In the deployed configuration the flow partition 7 is arranged as illustrated in Figure 1. The pivot axis of the hinge may be coaxial with the axis of the edge 18, or within the cavity 2, such that in the retracted configuration the flow partition 7 is folded down into the cavity 2. The flow partition 7 may instead by slidably attached to the inner surface of the cavity wall 12 such that it can be slid up to protrude into the cross-flow 13.

The hinge or sliding mechanism may be motorised, mechanically actuated by movement of a door covering the cavity 2, or spring loaded.

Although not shown, in preferred embodiments, a traditional leading edge 14 palliative design is also installed across the transverse axis of the cavity 2.

The presence of flow partitions 7 tends to help lift the shear layer above the cavity 2 i.e. giving the shear layer greater reach and reducing its effect on equipment and payloads 5 within the cavity. This removes a layer of uncertainty within the cavity flow as the external cross-flow 13 is prevented from interfering with the cavity flow circulation, i.e. the circulation of the cavity flow is driven by the shear layer only and external influences are removed. Equally, the simple design offers itself to entrain a vortex along the side wall 12 of the cavity 2 with the potential to provide some stability to outer edges of the cavity flow and potentially maintain a higher shear layer longer. In addition, this vortex will further support the blockage of external cross-flow 13 entering the cavity 2.

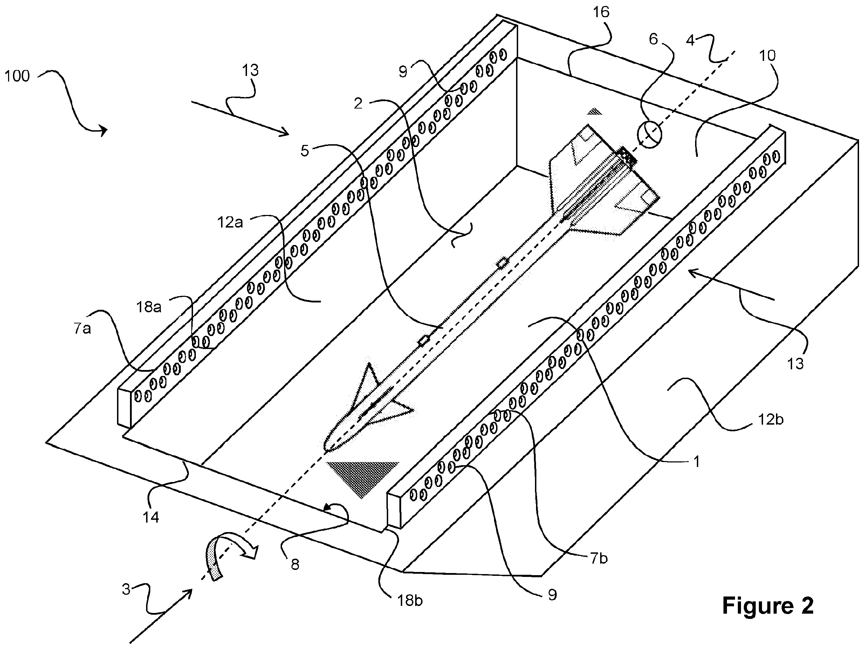

Figure 2 illustrates another example of a bay 100 having flow partitions 7 according to an embodiment. Here, each flow partition 7a, 7b (generally 7) comprises a series of perforations 9 (i.e. holes) extending the full width of the flow partition 7. The perforations may be between 0.5cm and 2cm in diameter. Preferably, the perforations 9 are between 1cm and 1.5cm in diameter. More preferably, the perforations 9 are a maximum of 0.5 boundary layer lengths in diameter.

The perforations 9 may comprise an element extending into the main flow 3. In other words, the perforations 9 may extend laterally out of the outboard surface of the flow partition 7.

The perforations 9 may be randomly distributed across the whole surface of the flow partition 7.

While the perforations 9 are illustrated as having a circular cross-section, in other embodiments the perforations 9 may have an alternative cross-section, such as hexagonal, triangular or square. The perforations 9 may be tessellated, or may form a honeycomb structure within the flow partition 7.

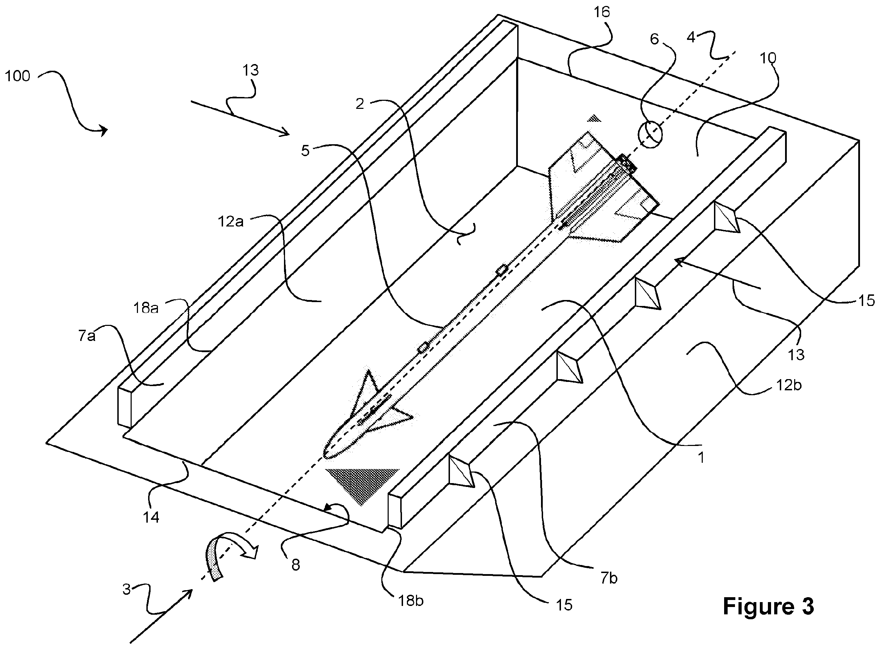

In another embodiment, one flow partition 7 may take the form illustrated in Figure 2 while the other flow partition 7, if present, may take the form described with reference to Figures 1 and 3.

In general it will be appreciated that any non-uniformity introduced into the form of one or more of the individual perforations 9 and/or any non-uniformity introduced between one or more of the different perforations 9 and/or their relative arrangements/positions etc. will tend to provide the possibility of increased numbers or variations of sources of fine scale turbulence, with corresponding increased numbers of small vortices and/or thicker shear layer and/or increased disruption of the temporal coherence of the small vortices. Any such effects may further improve the suppression performance of the bay 100.

Figure 3 illustrates the flow partitions 7 being used in conjunction with a plurality of the shock stabilisers. In the illustrated embodiment, four shock stabilisers 7 are arranged to protrude from each side of the bay 100, into the surrounding ambient flow in use. The shock stabilisers 15 are disposed on the upper surface of the side walls 12. The shock stabilisers 15 are not arranged forward of the cavity 2, as defined by the front edge 8.

In the illustrated preferable embodiment, the shock stabilisers 15 are arranged such that one side of each is parallel with the outboard surface of the flow partition 7. In other embodiments, the shock stabilisers 15 are laterally offset from flow partitions 7.

As the shock stabilisers 15 interact with high-energy flows when installed in a fighter aircraft 400, suitable construction materials include titanium, steel or a composite such as carbon fibre composite. The shock stabilisers 15 may be made of the same material as the skin of the vehicle into which the bay 100 is installed. Where the bay 100 is installed in an environment with reduced flow velocity and energy, for example a low-performance car, materials that are not renowned for their strength or life properties, such as plastic, could be used.

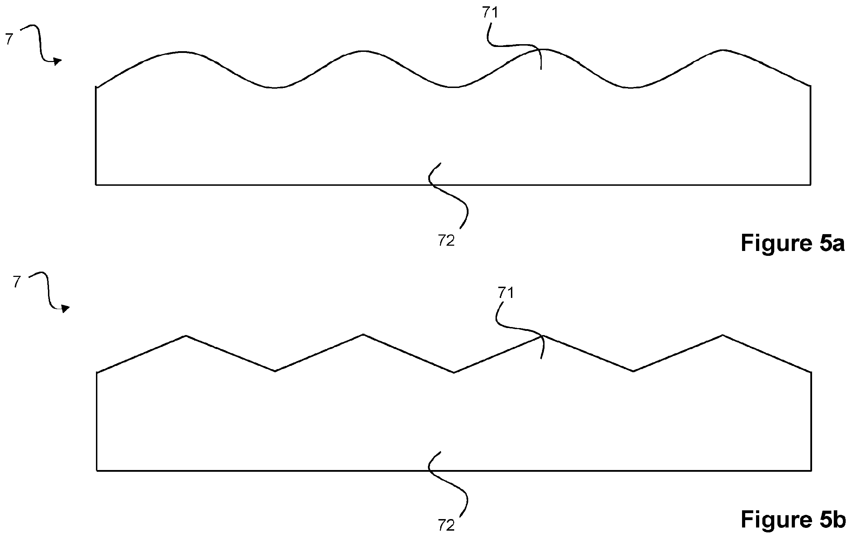

As will be explained in more detail when discussing Figures 5a and 5b, the shock stabilisers 7 may be integrated with the upper surface of the flow partitions 7.

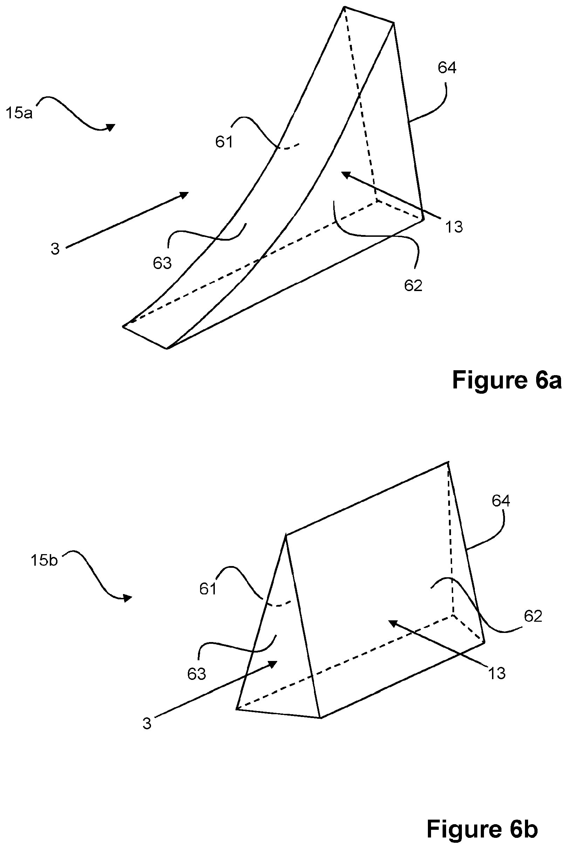

Further shock stabiliser 15 designs will be later described with reference to Figures 6a-d. In Figure 3, the shock stabilisers 15 take the form of a pyramid having a triangular base, i.e. a right-angled pyramid. One side (i.e. edge) of the triangular base is arranged in parallel with the outboard surface of the flow partition 7. One face of the pyramid is formed by the outer surface of the flow partition 7. Two triangular panels (i.e. panels in the form of right-angled triangles) are inclined towards the cavity 2 to connect to the outboard surface of the flow partition 7 and each other. The shock stabiliser 15 may be open at the bottom, such that the "base" described above is the perimeter of an opening.

The two triangular panels generally facing towards the impinging cross-flow 13 (i.e. away from the cavity 2) are preferably arranged at an angle of between 15 and 70 degrees to the cross-flow 13. In other words, the base has two edges arranged at between 20 and 75 degrees to the axis of the flow partition 7.

The height of the shock stabiliser 15 is preferably between 4cm and 20cm tall, and preferably between 6cm and 12cm tall. The width and depth of the shock stabiliser 15 are preferably in the range of between 2cm and 20cm. The shock stabilisers 15 may have a profile thickness that can be constant, tapered or irregular.

A pinnacle (i.e. a pointed tip) at the top of the shock stabiliser 15 tends to increase cavity 2 flow, via means of inducing vortical flow. The latter tends to help to suppress acoustic effects of the shear layer. Flow mixing is the introduction of a new flow component with different direction, circulation and or energy to the existing flow structure.

The shock stabiliser 15 utilises the energetic cross-flow 13 to energise the shear layer and generate a shock at the foot (i.e. base) of the shock stabiliser 15. Hence, it is advantageous to increase the surface area of the shock stabiliser 15 facing towards impinging cross-flow 13.

Shock stabilisers 15 in described embodiments are essentially vortex generators. Vortex generators are traditionally used to maintain an area of attached flow to support control surfaces of a vehicle (i.e. whereby the boundary layer has a positive velocity profile coming from the surface to freestream flow). These have not been considered to support mixing within cavity 2 flow systems. The shock stabilisers 15 induce fixed shocks which tend to re-position the shear layer to a greater height above the cavity 2 and stabilises an area of unsteady flow (i.e. the shear layer is moved away from intruding into the cavity 2). Unsteady flow is highly non-linear and turbulent flow. The fixed shocks tend to make the effect of unsteady flow systems beyond the shear layer more uniform and consistent. In turn, this allows for better prediction of the flow effects on payloads 5 in the cavity 2 or structures neighbouring the cavity 2.

In addition, these shock stabiliser 15 systems tend to reduce the influence of transient shocks on the payload 5 immediately following ejection from the cavity 2 by either eliminating the transient shock or limiting their movement. Shock stabilisers 15 introduce shocks at a constant position relative to the plane of the opening of the cavity 2, with the desired effect to either eliminate transient shocks or overpower them, to ensure they have little effect on the jettisoned payload 5.

The shocks generated by the shock stabilisers 15 have a constant position within the volume above the cavity 2. Therefore, a released payload 5 interacts with the shocks generated by the shock stabilisers 15 at a known positon within the flow volume. Without shock stabilisers 15, expansions (a form of shock, where flow is accelerated as opposed to a compression where flow is deaccelerated) may emanate from the undulation of the shear layer, which may transition in the horizontal plane (i.e. across the cavity 2 opening). Hence, these perturbations/oscillations or even transient shock position make it difficult to predict where a payload 5 will interact with shocks in the ambient flow outside of the cavity 2.

The application of the described shock stabilisers 15 therefore tend to support payload 5 release and reduces adverse acoustic effects in cavity flows by inducing mixing.

A traditional spoiler for deflecting fluidic flow and consequently raising the shear layer may also be present in the region of the leading edge 14 of the cavity 2. For example, a spoiler may be installed forward of the leading edge 14. A traditional spoiler is generally disposed across a cavity 2, i.e. arranged along the transverse axis relative to the impinging main flow 3.

The four shock stabilisers 15 are illustrated as being equidistantly spaced apart along the length of the cavity 2. However, in other embodiments, the shock stabilisers 15 may be irregularly spaced. At a minimum, the shock stabilisers 15 are spaced apart by a distance equal to the maximum height of the shock stabiliser 15.

While four shock stabilisers 15 are illustrated on either side of the cavity 2, in other embodiments there may be one or more shock stabilisers 15 present on either side of the cavity 2. Preferably, there are between (inclusive) three and six shock stabilisers 15 on either side of the cavity 2. However, in some embodiments there may be more shock stabilisers 7 than this on either side of the cavity 2, for example up to 20 on either side. The shock stabilisers 15 on one side 12 of the cavity 2 are illustrated as being positioned directly opposite those on the other side 12 of the cavity 2, i.e. the same distance from the front edge 14 of the cavity. In other embodiments, the shock stabilisers 15 on opposite sides 18 of the cavity 12 are not positioned opposite each other, i.e. they may be offset from each other along the longitudinal axis of the bay 100.

Operation of the bay 100 will now be described with reference to Figures 4a and 4b. Here, a fighter aircraft 400 having the bay 100 is illustrated, although it would be appreciated the bay 100 may be installed in other forms of vehicle. The bay 100 is shown in cross-section while the rest of the aircraft 400 is shown in schematic form.

Figure 4a shows the bay 100 in a closed configuration. Here, the side of the bay 100 having the opening, i.e. the aperture defined by the edges 14, 16, 18 of the cavity 2, faces the inside of the aircraft 400. The outer surface of the base 1 of the bay 100 faces toward the ambient atmosphere outside of the aircraft 400.

The bay 100 is shown installed in the ventral fuselage of the aircraft 400. The bay 100 may instead be installed in the fuselage shoulders, or in the wings of the aircraft 400.

A shaft 11 couples the bay 100 at the pivot point 6 to a motor 9. The motor 9 is for example an electric motor. When activated, the motor 9 drives the shaft 11 to rotate and in so doing open or close the bay 100. In other embodiments, the motor 9 may be directly coupled to the pivot point 6. In other embodiments again, bay 100 may comprise the motor 9 that is mechanically coupled to a fixed point in the body of the aircraft 400. In use, the bay 100 may arranged to extend out into the surrounding flow or be drawn inside the aircraft 400 before rotating into the open configuration. The bay 100 may translate and rotate simultaneously. Alternatively, the bay 100 may be arranged to rotate about one axis 4 only.

The outer edges of the base 1 may form a relatively tight seal with the skin of the aircraft 400 surrounding the bay 100 when in the closed configuration. The base 1 may extend beyond the shape defined by the outer surface of the walls 8, 10, 12, of the bay 100. In other words, the external surface of the base 1 may be conformal with the skin of the aircraft 400.

Figure 4b illustrates the bay 100 in an open configuration. Here, the motor 9 has driven the bay 100 to rotate such that the cavity 2 opening is facing toward the ambient atmosphere to expose the payload 5. The flow partitions 7 coupled to the side walls 18 of the bay 100 are therefore shown protruding into the ambient airflow.

It would be understood that particular design features would be dependent on the cavity system and its operational environment, i.e. air, land or sea.

Figures 5a and 5b illustrate further modifications to the flow partitions 7 illustrated in Figures 1 to 3. Here, the flow partitions 7 comprise a main body 72 and a series of undulations 71 on top of the main body 72 (i.e. the undulations 71 form the top edge profile of the flow partition 7, and fluctuate in the vertical plane). In other words, the flow partition 7 is of variable height along its length. These undulations 71, particularly in the form of teeth, tend to serve as additional sources of fine scale turbulence giving rise to yet further small vortices, hence tending to provide yet further loss of temporal coherence. This disperses the shear layer reducing its effect acoustically, for circumstances where high-energy flows manage to vault the flow partition 7. In other words, the undulations 71 act as shock stabilisers 15 in the matter described with reference to Figure 3. By giving the top edge of the flow partition 7 an undulating profile, the effect of the flow partition 7 to lift the shear layer is enhanced.

In other words, the undulations 71 present a disruption or change to the cross-flow 13 direction to deflect the cross-flow 13 both in and out of the cavity 2. The undulations 71 may increase the deflection of the vortices into and/or out of the cavity 2, thereby further enhancing the thickening of the shear layer. The additional vorticity to the neighbouring flow structures is enhanced by the flow partition 7 ridge profile, which helps to maintain stability of the shear layer at the edges 18 of cavity 2. In addition, the vortical flow acts as a virtual barrier to the cross-flow 13 on top and about the flow partition 7. Therefore, the blockage effects of the flow partition 7 are deemed to be higher in height from the vehicle skin, than the actual measurable height of flow partition 7 in the same plane.

The main body 72 takes the general form of the flow partition 7 as previously described. The main body 72 may be formed of a series of connected panels. The panels may be arranged at oblique angles to each other.

The undulations 71 and main body 72 may be integrally formed, i.e. formed as one piece. Alternatively, the undulations 71 may be separately applied to the upper surface of the main body 72. The undulations 71 may take the form of the shock stabilisers 15 as described with reference to Figure 3 and Figures 6a-d. Here, the shock stabilisers 15 are arranged such that their inboard panels 61 face in the same direction as the inboard surface of the flow partition 7.

The undulations 71 may be the same width (i.e. lateral extent) as the main body 72. Alternatively, the undulations 71 may be narrower or wider than the main body 72. The inboard and outboard surfaces of the undulations 71 may respectively match the contours of the inboard and outboard surfaces of the main body 72. By introducing undulation into the flow partition 7 in the horizontal plane, cross-flow 13 impacting the undulations 71 in the vertical plane tends to hit a first undulation before an adjacent undulation, which introduces variations in the creation of vortices.

The undulations 71 may not reach the full depth of the flow partition 7. Preferably, the depth of the undulations 7 is limited to the depth of the main body 72 minus one boundary layer height (i.e. about 2cm from the bottom of the flow partition 7). The undulations 71 are illustrated as forming about 15% of the total surface area of the flow partition 7. This is for illustrative purposes only. The undulations 71 may be smaller or larger than those illustrated, such that between 1% and 75% of the flow partition 7 surface area is formed of undulations 71. Preferably, between 5% and 15% of the flow partition 7 surface area is formed of undulations 71.

The undulations 71 are shown as being uniform i.e. the cutouts are the same depth and length throughout. In other embodiments, the undulations 71 are irregular, i.e. with variable depths and/or lengths.

In Figure 5a the undulations 71 are sinusoidal in nature. In other words, in cross-section the upper edge of the flow partition 7 is formed of a series of connected convex and concave curves.

In Figure 5b the undulations 71 comprise sharp teeth in cross-section. In other words, the undulations 71 form a sawtooth or zigzag edge.

In the illustrated embodiment, the teeth are all of the same longitudinal cross-sectional shape (triangular with substantially equilateral sides, when viewed along the direction of the cross-flow 13 head on) as each other, and are all of the same size as each other. Instead, of being triangles, the teeth may be rectangular, rounded, semi-circular, irregularly shaped, or square in longitudinal cross-section (i.e. when viewed along the direction of the cross-flow 13 head on). In other words, the teeth may take a more curved or rounded form, or a flatter form, than the pointed teeth illustrated. The teeth may be much wider (i.e. longer in the direction of the longitudinal axis of the flow partition 7) than those illustrated. The teeth may have flattened upper surfaces.

In alternative embodiments, some teeth, or even one tooth in the set of teeth, may be of different cross-sectional shapes or surface areas to the other teeth. For example, a first tooth may be semi-circular in cross-section, while an adjacent second tooth may be rectangular in cross-section.

In one embodiment the teeth are arranged on the main body 72 such that the face of each tooth is parallel with the portion of the main body 72 to which it is attached, i.e. the plane of the front surface of each tooth is generally perpendicular to the direction of the cross-flow 13.

In this embodiment, the teeth are all arranged in a symmetric evenly spaced arrangement i.e. the teeth are distributed evenly over the main body 72. One tooth is shown being directly coupled to the adjacent tooth. Alternatively, there may be regular gaps between each tooth.

The teeth may extend to different heights relative to each other. For example, a first tooth may be of height x, a second adjacent tooth may be of different height y, and another tooth adjacent to the second tooth may be of height x.

In the above embodiments, the inboard and outboard surfaces of the undulations 71 are arranged in parallel with the plane of the inboard and outboard surfaces of the main body 72 at the point where the tooth is connected to the main body 72. In other words, if the inboard surface of the main body 72 is parallel with the longitudinal edge 18, then the inboard surface of the undulations 71 are parallel with the longitudinal edge 18. However, this need not be the case, and in other embodiments one or more of undulations 71 (i.e. teeth) may be twisted relative to the main body 72 i.e. a transverse plane through a tooth may not be parallel with a transverse plane through the main body 72.

Several shock stabiliser 15 designs will now be described with reference to Figures 6a to 6d. These designs may be applied to discrete shock stabilisers 15 used in addition to the flow partitions 7, as described with reference to Figure 3, or they may be applied to the undulations 71 integrated with the flow partitions 7. In other words, the teeth described above with reference to Figure 5b may take the form described below with reference to Figures 6a-d.

While each of these designs tends to have intrinsic advantages, the concept is not necessarily limited to these designs.

In these Figures, shock stabilisers 15 are shown having an inboard panel 61 facing towards the cavity 2 (this may be formed by the outboard surface of the flow partition 7, against which the shock stabiliser 15 is disposed), an outboard panel 62 facing towards impinging cross-flow 13, a front panel 63 facing generally towards the intended direction of travel of the bay 100 (into the main flow 3), and a rear panel 64 facing generally away from the intended direction of travel of the bay 100. Rather than the sharp edges of the shock stabilisers 15 shown in Figure 3, the shock stabilisers 15 in Figures 6a-dare multi-faceted. While the shock stabilisers 15 are illustrated and described as comprising discrete joined panels, they may instead by integrally formed.

Figure 6a illustrates a shock stabiliser 15 in the form of a "ski slope". The stabiliser 15 comprises an inboard panel 61 whose plane is orthogonal to the surface to which the shock stabiliser 15 is attached. In other words, in the illustrated embodiment, the inboard panel 61 comprises a vertical plane parallel with the plane of the cavity side wall 12. Here, the outboard panel 62 is parallel with and offset from the inboard panel 61 in the transverse direction. The inboard and outboard panels 61, 62 are planar.

The front panel 63 is connected to the front edges of each of the inboard and outboard panels 61, 62, while the rear panel 64 is connected to the rear edges of the inboard and outboard panels 61, 62. The front panel 63 comprises a curved face presented to the main flow 3. The front panel 63 is concave, such the panel curves inward towards to the rear of the shock stabiliser 15. While in the illustrated embodiment the front panel 63 is shown being orthogonal to the direction of travel of the cavity, i.e. face-on to the impinging main flow 3, in other embodiments the front panel 63 is orientated relative to the main flow 3. In a preferred embodiment, the front panel 63 is arranged such that its surface is orientated at between 5 and 20 degrees to the direction of the main flow 3. More preferably, the front panel 63 is arranged such that its surface is orientated at between 5 and 10 degrees to the direction of the main flow 3. This increases the surface area of the shock stabiliser 15 that interacts with the cross-flow 13.

The rear panel 64 is planar and arranged vertically relative to the surface to which the shock stabiliser 15 is attached. However, in other embodiments the rear panel 64 may be curved in the same way as the front panel 63, or it may be planar and sloped relative to the surface to which the shock stabiliser 15 is attached. The rear panel 64 takes a rectangular form.

Figure 6b illustrates a shock stabiliser 15 similar to that shown in Figure 3, albeit extended in direction of the main flow 3. The front panel 63 and the rear panel 64 of the shock stabiliser 15 take the form of an isosceles triangle. In another embodiment, the front panel 63 and the rear panel 64 of the shock stabiliser 15 take the form of an equilateral triangle. The front panel 63 and the rear panel 64 are of the same height and width as each other. The base edges of the front panel 63 and the rear panel 64 are not parallel to each other, and instead tend to point toward each other. In another embodiment, the base edges of the front panel 63 and the rear panel 64 are parallel with each other. While generally vertical, the front panel 63 and the rear panel 64 are inclined inward such that they form an acute angle with the longitudinal edge of the flow partition 7. The inboard sides of the front panel 63 and the rear panel 64 are further apart than the outboard sides.

The outboard panel 62 is rectangular or square in profile, and is coupled to the outboard side of each of the front panel 63 and rear panel 64. The inboard panel 61 is generally rectangular in profile and has a larger surface area than that of the outboard panel 62. The inboard and outboard panels 63, 64 slope toward each other to meet at an apex. The apex is therefore an elongate peak. The base of the shock stabiliser 15 is trapezoidal in shape. In embodiments where the front panel 63 and the rear panel 64 are parallel to each other, the base forms a parallelogram (such as a square or rectangle).

While the upper edge of the shock stabiliser 15 (i.e. the side of the shock stabiliser 15 where the inboard panel 61 and outboard panel 62 meet) is illustrated as being parallel with the flat upper surface of the main body 72 of the flow partition 7, due to the front panel 63 and the rear panel 64 being the same height, it may instead slope such that the profile of the shock stabiliser 15 reduces in height along its length (i.e. with distance from the front edge 8 of the cavity 2).

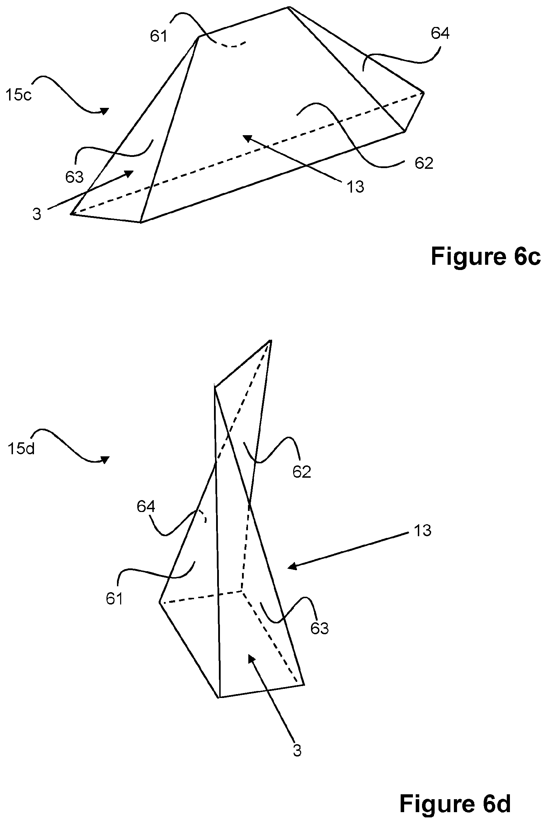

Figure 6c illustrates a shock stabiliser 15 similar in design to the shock stabiliser 15 of Figure 6b and common description will not be repeated. Here, the front panel 63 and rear panel 64 are inclined relative to the vertical axis and are arranged at an acute angle relative to the longitudinal edge of the flow partition (i.e. the longest edge, the upper edge of the inboard surface of the flow partition 7 where this is parallel with the cavity edge 18 in the illustrated embodiment). Preferably, the panels 64 are orientated at about between 30 degrees and 60 degrees to both axes, and more preferably at about 45 degrees to both axes. Therefore, the inboard panel 61 and outboard panel 62 connecting the front panel 63 and rear panel 64 are trapezoidal in profile.

By angling the front panel 63 and rear panel 64 with respect to the horizontal axis and with respect to the vertical axis, a linear ramp tends to be provided to increase the volume of attached flow on the ridge line (i.e. the apex), generating a small vortex to increase mixing.

Figure 6d illustrates a shock stabiliser 15 that is twisted about its vertical axis (i.e. the axis orthogonal to the surface to which the shock stabiliser 15 is attached). The front panel 63 and rear panel 64 take a generally triangular form, similar to the shock stabiliser 15 of Figure 6c. The inboard panel 61 and outboard panel 62 take a trapezoidal form in a preferred embodiment, although they may take a rectangular or square form.

Here, the bottom sides of the front 63 and rear 64 panels are parallel with each other in the horizontal plane (i.e. the plane of the surface to which the shock stabiliser 15 is attached). The front 63 and rear 64 panels are joined together by the inboard panel 61 and the outboard panel 62. Therefore, the base of the shock stabiliser 15 defined by the panels 61, 62, 63, 64 is generally rectangular. However, in other embodiments the front panel 63 and rear panel 64 may be inclined towards each other in the horizontal plane, making the base trapezoidal.

The inboard 61 and outboard 62 panels incline inwards relative to the vertical plane and meet at an apex (i.e. defining an upper edge of the shock stabiliser 15). The apex is angled relative to the longitudinal edge of the flow partition 7 in the horizontal plane (i.e. zero vertical inclination). In other words, the upper edge of the shock stabiliser 15 is not parallel with the longitudinal edge of the flow partition. The apex of the shock stabiliser 15 is angled at about 20 degrees relative to the longitudinal edge of the flow partition 7 (and hence the edge 18 of the cavity 2 in the illustrated embodiment), such that its leading end is closer to the edge 18 than its trailing end. This therefore results in the inboard panel 61 and outboard panel 62 being torqued (i.e. twisted and deformed). Axes through the apexes of the triangles forming the front panel 63 and rear panel 64, perpendicular to the plane of respective panels 63, 64, are not co-axial. Axes passing through the ends of the bottom edges of the front panel 63 and rear panel 64 and second outboard surfaces (i.e. the axes are the bottom edges of the inboard panel 61 and outboard panel 62) are arranged obliquely to the axis of the apex.

While in a preferred embodiment the axis of the apex of the shock stabiliser 15 is angled at about 20 degrees to the longitudinal edge of the flow partition 7, the axis of the apex (i.e. the top edge of the shock stabiliser 15) may be angled at between about 5 degrees and 45 degrees to the edge and more preferably between about 10 degrees and 30 degrees to the edge. This assumes the edge of the flow partition 7 is linear and parallel with the cavity edge 18. Where the flow partition 7 is itself undulating in the horizontal plane, the apex should be angled as above relative to the cavity edge 18.

This design tends to show particular advantage in controlling the fluidic flow impinging on the bay 100. It has been found that the twisted inboard panel 61 tends to draw generated vortices toward to outer edges 14, 16, 18 of the cavity 2. In other words, the shear layer tends to be raised out of the cavity 2.

In other words, the shock stabiliser 15 has been seen to control the flow on the outer edges 14, 16, 18 of the cavity 2 by inducing and holding a vortex there. This vortex then acts as a virtual barrier, preventing external flow falling into the cavity 2 and wrapping it into the vortex itself. The removal of cross-flow then removes its disturbance to the shear layer, allowing it to grow in height more uniformly across the width of the cavity 2. Therefore, payloads 5 and other components within the cavity 2 co-located at the side wall 12 are better protected. The ridge line (i.e. apex) angle is designed to shed the vortex with a directional component away from the cavity 2. This is to prevent the vortex dropping in to the cavity 2.

Further designs not illustrated may include shock stabilisers 15 having multiple peaks to increase shear layer mixing. The shock stabilisers 15 may be cylindrical. Alternatively again, the shock stabilisers may be cuboid. It would be appreciated that combinations of these designs of shock stabilisers 15, and those shown in the Figures, fall within the scope of the disclosure. For example, the design of the shock stabiliser 15 in Figure 6c may have a flat top, rather than sharp apex, to be more cuboidal in nature. Further, a twist may be introduced along the vertical axis of the pyramidal design shown in Figure 3 (i.e. the axis perpendicular to the surface to which the shock stabiliser is attached), to skew the inboard panel similar to that of Figure 6d.

While the cavity 2 is illustrated as having a rectangular base 1 and being defined by vertical side walls 12, a vertical aft wall 10 and a sloping front wall 8, it would be appreciated that the shock stabilisers 15 are applicable to other cavity 2 shapes. For example, all walls 8, 10, 12 may be vertically arranged relative to the horizontal base 1, or some or all of the walls 8, 10, 12 may be arranged at an acute angle relative to the horizontal base 1. The cavity 2 may comprise a circular base 1, triangular base 1, square base 1 or an irregularly shaped base 1. In other words, one of the front wall 8 and rear wall 10 may not be present, for example where the base 1 is triangular; i.e. the longitudinal walls 12 may be inclined inwards towards each other.

While the embodiments described above relate to a rotary payload bay 100 having shock stabilisers 15 suitable for use on an aircraft 400, such as a civil airliner, military fighter jet or a helicopter, in other embodiments the shock stabilisers 15 are suitable for use on other forms of bay 100 and with other forms of vehicle. For example, the bay 100 may be a wheel well, the inside of a car (i.e. the opening of the cavity 2 may be a window or sunroof), open superstructure, or any other bay 100 moving through fluid or with fluid moving past it. The rotary payload bay 100 is applicable to land vehicles such as trains and high performance cars, and naval vessels such as yachts and submarines.

While the embodiments described above relate to a rotary payload bay 100 having flow partitions 7 suitable for use on an aircraft 400, such as a civil airliner, military fighter jet or a helicopter, in other embodiments the flow partitions 7 are suitable for use on other forms of bay 100 and with other forms of vehicle. For example, the bay 100 may be a wheel well, the inside of a car (i.e. the opening of the cavity 2 may be a window or sunroof), open superstructure, or any other bay 100 moving through fluid or with fluid moving past it. The rotary payload bay 100 is applicable to land vehicles such as trains and high performance cars, and naval vessels such as yachts and submarines.

The bay 100 may be fixed (i.e. static) instead of rotary and therefore may be persistently open or comprise hinged doors. The flow partitions 7 may be disposed inboard of the hinged doors to prevent cross-flow 13 leaking from a gap under the door into the cavity 2.

Alternatively, the flow partitions 7 may be motorised and arranged to descend into their own cavities when the bay 100 is closed. In other words, the flow partitions 7 may descend into the walls 12 of the bay 100, or the surface surrounding the cavity 2. The flow partitions 7 may be driven upwards to extend into the ambient flow when the bay 100 is open.

The cavity 2 opening may be formed by the skin of a vehicle i.e. aircraft 400. In other words, the cavity 2 may not have walls 8, 10, 12 as such, but be integrally formed with the vehicle.

While the ambient fluid through which the bay 100 is moving is described above as flowing air (i.e. airflow), it may instead be water.

While the bay 100 is shown as being rectangular in cross-section along its longitudinal axis (i.e. where the base 1 and two side walls 12 meet at right angles), it would be appreciated that the present disclosure covers other bay designs, such as those having semi-circular cross-sections. While such a design would effectively have one continuous side wall 12, it would have two upper surfaces to which shock stabilisers 15 are attached.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Adjacent shock stabilisers 15 may take different forms to each other.

Singular references do not exclude a plurality; thus, references to 'a', 'an', 'first', 'second', etc. do not preclude a plurality. In the claims, the terms "comprising" or "including" do not exclude the presence of other elements.

## Claims

1. A cavity system (100) for use on a vehicle (400), comprising:
a cavity (2) having at least one of a front edge (14) and a rear edge (16), and longitudinal edges (18a, 18b), the front edge and/or rear edge and the longitudinal edges together defining an opening; and
at least one elongate flow partition (7a, 7b) protruding from a surface adjacent each longitudinal edge of the cavity into the ambient flow outside of the cavity, the at least one flow partition comprising an inboard surface facing predominantly towards the cavity, an outboard surface facing predominantly away from the cavity and a plurality of open channels (9) between the inboard surface and the outboard surface.

2. The cavity system according to claim 1, comprising a bay having a front wall (8), rear wall (10) and at least one side wall (12a, 12b), the upper surfaces of which respectively comprising the front edge, the rear edge and the longitudinal edges.

3. The cavity system according to claim 2, wherein the bay is a rotary payload bay.

4. The cavity system according to claim 2 or claim 3, wherein the at least one flow partition protrudes from an upper surface of the at least one side wall.

5. The cavity system according to any one of the preceding claims, wherein the inboard surface and/or outboard surface of the at least one flow partition is non-planar.

6. The cavity system according to any one of the preceding claims, wherein an upper surface of the at least one flow partition is undulating in the vertical plane.

7. The cavity system according to any one of the preceding claims, comprising at least one shock stabiliser (15) arranged on either side of the cavity to protrude into the ambient flow, wherein the at least one shock stabiliser is disposed on the upper surface of the at least one flow partition.

8. The cavity system according to any one of claims 1 to 6, comprising at least one shock stabiliser (15) arranged on either side of the cavity to protrude into the ambient flow, wherein the at least one shock stabiliser is disposed adjacent to the outboard surface of the at least one flow partition.

9. The cavity system according to any one of the preceding claims, wherein the inboard surface of the at least one flow partition lies at an acute angle with respect to the longitudinal edge of the cavity.

10. The cavity system according to any one of the preceding claims, wherein the at least one flow partition is between 2cm and 20cm tall.

11. The cavity system according to any one of the preceding claims, comprising a motor for driving the at least one flow partition to ascend from or descend into the surface adjacent the cavity longitudinal edge.

12. The cavity system according to any one of claims 1 to 10, comprising a motor and wherein the at least one flow partition comprises a hinge, wherein the motor is arranged to drive the at least one flow partition to rotate about the hinge to be selectively positioned in the ambient flow or positioned to rest against the surface adjacent the cavity.

13. The cavity system according to any one of the preceding claims, comprising a releasable payload (5).

14. An aircraft comprising the cavity system according to any one of the preceding claims.

## Patentansprüche

1. Hohlraumsystem (100) zur Verwendung auf einem Fahrzeug (400), umfassend:
einen Hohlraum (2), der mindestens eine von einer Vorderkante (14) und einer Hinterkante (16) und Längskanten (18a, 18b) aufweist, wobei die Vorderkante und/oder die Hinterkante und die Längskanten zusammen eine Öffnung definieren; und
mindestens eine langgestreckte Strömungstrennung (7a, 7b), die von einer Oberfläche, die an jede Längskante des Hohlraums angrenzt, in die Umgebungsströmung außerhalb des Hohlraums vorsteht, die mindestens eine Strömungstrennung umfassend eine Innenoberfläche, die vorwiegend zu dem Hohlraum hin gerichtet ist, eine Außenoberfläche, die vorwiegend von dem Hohlraum weg gerichtet ist, und eine Vielzahl von offenen Kanälen (9) zwischen der Innenoberfläche und der Außenoberfläche.

2. Hohlraumsystem nach Anspruch 1, umfassend eine Bucht, die eine Vorderwand (8), eine Hinterwand (10) und mindestens eine Seitenwand (12a, 12b) aufweist, deren obere Oberflächen jeweils umfassend die Vorderkante, die Hinterkante und die Längskanten.

3. Hohlraumsystem nach Anspruch 2, wobei die Bucht eine rotierende Ladebucht ist.

4. Hohlraumsystem nach Anspruch 2 oder 3, wobei die mindestens eine Strömungstrennung von einer oberen Oberfläche der mindestens einen Seitenwand vorsteht.

5. Hohlraumsystem nach einem der vorstehenden Ansprüche, wobei die Innenoberfläche und/oder die Außenoberfläche der mindestens einen Strömungstrennung nicht eben ist.

6. Hohlraumsystem nach einem der vorstehenden Ansprüche, wobei eine obere Oberfläche der mindestens einen Strömungstrennung in der vertikalen Ebene wellenförmig verläuft.

7. Hohlraumsystem nach einem der vorstehenden Ansprüche, umfassend mindestens einen Stoßstabilisator (15), der auf beiden Seiten des Hohlraums angeordnet ist, um in die Umgebungsströmung vorzustehen, wobei der mindestens eine Stoßstabilisator auf der oberen Oberfläche der mindestens einen Strömungstrennung eingerichtet ist.

8. Hohlraumsystem nach einem der Ansprüche 1 bis 6, umfassend mindestens einen Stoßstabilisator (15), der auf beiden Seiten des Hohlraums angeordnet ist, um in die Umgebungsströmung vorzustehen, wobei der mindestens eine Stoßstabilisator angrenzend an die Außenoberfläche der mindestens einen Strömungstrennung eingerichtet ist.

9. Hohlraumsystem nach einem der vorstehenden Ansprüche, wobei die Innenoberfläche der mindestens einen Strömungstrennung in einem spitzen Winkel in Bezug auf die Längskante des Hohlraums liegt.

10. Hohlraumsystem nach einem der vorstehenden Ansprüche, wobei die mindestens eine Strömungstrennung zwischen 2 cm und 20 cm hoch ist.

11. Hohlraumsystem nach einem der vorstehenden Ansprüche, umfassend einen Motor zum Antreiben der mindestens einen Strömungstrennung, um von der Oberfläche, die an die Hohlraumlängskante angrenzt, aufzusteigen oder in diese abzusteigen.

12. Hohlraumsystem nach einem der Ansprüche 1 bis 10, umfassend einen Motor und wobei die mindestens eine Strömungstrennung ein Scharnier umfasst, wobei der Motor angeordnet ist, um die mindestens eine Strömungstrennung anzutreiben, um um das Scharnier herum zu rotieren, um in der Umgebungsströmung selektiv positioniert zu sein oder positioniert zu sein, um an der Oberfläche, die an den Hohlraum angrenzt, anzuliegen.

13. Hohlraumsystem nach einem der vorstehenden Ansprüche, umfassend eine freisetzbare Zuladung (5).

14. Luftfahrzeug, umfassend das Hohlraumsystem nach einem der vorstehenden Ansprüche.

## Revendications

1. Système de cavité (100) pour utilisation sur un véhicule (400), comprenant :
une cavité (2) ayant au moins l'un parmi un bord avant (14) et un bord arrière (16), et des bords longitudinaux (18a, 18b), le bord avant et/ou le bord arrière et les bords longitudinaux définissant ensemble une ouverture ; et
au moins une cloison d'écoulement allongée (7a, 7b) faisant saillie à partir d'une surface adjacente à chaque bord longitudinal de la cavité dans l'écoulement ambiant à l'extérieur de la cavité, l'au moins une cloison d'écoulement comprenant une surface intérieure orientée principalement vers la cavité, une surface extérieure orientée principalement à l'opposé de la cavité et une pluralité de canaux ouverts (9) entre la surface intérieure et la surface extérieure.

2. Système de cavité selon la revendication 1, comprenant un compartiment ayant une paroi avant (8), une paroi arrière (10) et au moins une paroi latérale (12a, 12b), dont les surfaces supérieures comprennent respectivement le bord avant, le bord arrière et les bords longitudinaux.

3. Système de cavité selon la revendication 2, dans lequel la baie est une baie de charge utile rotative.

4. Système de cavité selon la revendication 2 ou la revendication 3, dans lequel l'au moins une partition d'écoulement fait saillie à partir d'une surface supérieure de l'au moins une paroi latérale.

5. Système de cavité selon l'une quelconque des revendications précédentes, dans lequel la surface intérieure et/ou la surface extérieure de l'au moins une partition d'écoulement n'est pas plane.

6. Système de cavité selon l'une quelconque des revendications précédentes, dans lequel une surface supérieure de l'au moins une partition d'écoulement est ondulée dans le plan vertical.

7. Système de cavité selon l'une quelconque des revendications précédentes, comprenant au moins un stabilisateur de choc (15) agencé de part et d'autre de la cavité pour faire saillie dans l'écoulement ambiant, dans lequel l'au moins un stabilisateur de choc est disposé sur la surface supérieure de l'au moins une cloison d'écoulement.

8. Système de cavité selon l'une quelconque des revendications 1 à 6, comprenant au moins un stabilisateur de chocs (15) agencé de part et d'autre de la cavité pour faire saillie dans l'écoulement ambiant, dans lequel l'au moins un stabilisateur de chocs est disposé à côté de la surface extérieure de l'au moins une cloison d'écoulement.

9. Système de cavité selon l'une quelconque des revendications précédentes, dans lequel la surface en-bord de l'au moins une cloison d'écoulement forme un angle aigu par rapport au bord longitudinal de la cavité.

10. Système de cavité selon l'une quelconque des revendications précédentes, dans lequel l'au moins une cloison d'écoulement a une hauteur comprise entre 2 cm et 20 cm.

11. Système de cavité selon l'une quelconque des revendications précédentes, comprenant un moteur permettant d'entraîner l'au moins une cloison d'écoulement à monter ou descendre dans la surface adjacente au bord longitudinal de cavité.

12. Système de cavité selon l'une quelconque des revendications 1 à 10, comprenant un moteur et dans lequel l'au moins une cloison d'écoulement comprend une charnière, dans lequel le moteur est agencé pour entraîner l'au moins une cloison d'écoulement à tourner autour de la charnière pour être positionnée sélectivement dans l'écoulement ambiant ou positionnée pour reposer contre la surface adjacente à la cavité.

13. Système de cavité selon l'une quelconque des revendications précédentes, comprenant une charge utile amovible (5).

14. Aéronef comprenant le système de cavité selon l'une quelconque des revendications précédentes.
